# EUROPÄISCHE PATENTANMELDUNG

(11) **EP 2 012 411 A1**
(43) Veröffentlichungstag der Anmeldung: **07.01.2009**
(21) Anmeldenummer: 07013008.3
(22) Anmeldetag: 03.07.2007
(51) Int. Cl.: H02K 5/128

(54) **Gekapselter Elektromotor und Abtriebseinheit**

(71) Anmelder: SIEMENS AKTIENGESELLSCHAFT, 80333 München (DE)
(72) Erfinder: Gausmann, Rainer Dr., 47058 Duisberg (DE)

(57) **Zusammenfassung**

Ein gekapselter Elektromotor weist einen Rotor, einen um den Rotor angeordneten Stator und eine Kapsel auf, die zwischen dem Rotor und dem Stator angeordnet ist und dadurch den Rotor von dem Stator abkapselt, wobei zwischen dem Rotor und der Kapsel ein um den Rotor laufender Ringspalt ausgebildet ist, der derart gestaltet ist, dass mit Fluid, das in dem Ringspalt bei Betrieb des Elektromotors strömt, die Rotordynamik des Rotors positiv beeinflussbar ist. Eine Abtriebseinheit weist den gekapselten Elektromotor auf, wobei die Abtriebseinheit mit dem gekapselten Elektromotor antreibbar ist.

## Beschreibung

Die Erfindung betrifft einen gekapselten Elektromotor und eine Abtriebseinheit.

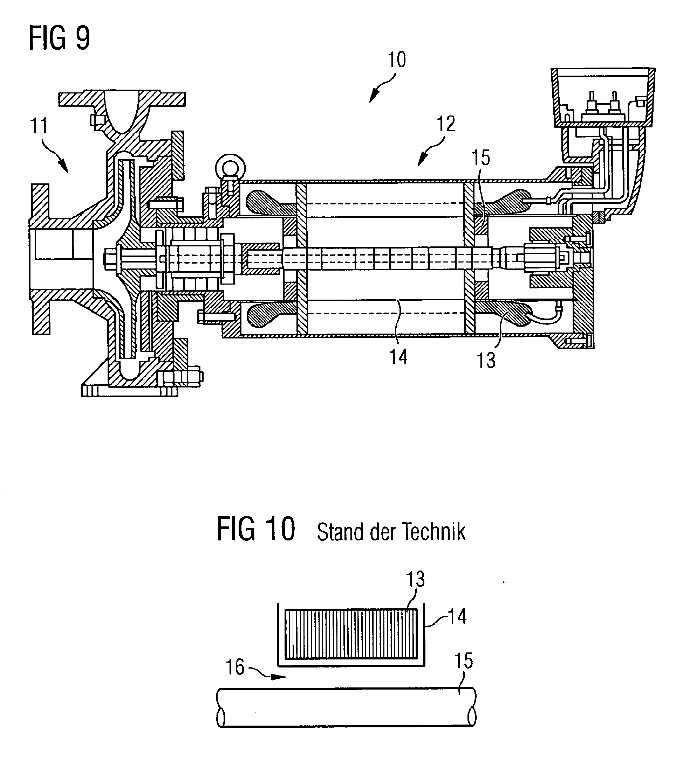

Eine herkömmliche Spaltrohrmotorpumpe, wie sie beispielhaft in Figur 9 gezeigt ist, weist eine Kreiselpumpe 11 und einen Elektromotor 12 auf, mit dem die Kreiselpumpe 11 antreibbar ist. Der Elektromotor 12 weist einen Rotor 15 auf, an den die Kreiselpumpe 11 fest gekoppelt ist. Um den Rotor 15 ist ein Stator 13 angeordnet, der zum Antreiben des Rotors 15 elektrisch betreibbar ist. Zwischen dem Stator 13 und dem Rotor 15 ist ein um diesen umlaufender Ringspalt vorgesehen, in dem ein Spaltrohr 14 angeordnet ist. Das Spaltrohr 14 kapselt den Stator 13 von dem Rotor 15 ab, wobei das Spaltrohr 14 als eine Kapsel funktioniert, die den Stator 13 von dem Rotor 15 hermetisch abtrennt.

Dadurch, dass das Spaltrohr 14 zwischen dem Stator 13 und dem Rotor 15 angesiedelt ist, ist ein Spalt 16 zwischen dem Spaltrohr 14 und dem Rotor 15 ausgebildet. Wie es aus Figuren 9 und 10 ersichtlich ist, ist das Spaltrohr 14 zylindrisch ausgebildet, so dass der Spalt 16 ein zylindrischer Ringspalt ist, der um den Rotor 15 konzentrisch verläuft. In Längsrichtung des Rotors 15 hat der Spalt 16 eine Länge, die die Höhe des Spalts um ein Vielfaches übersteigt.

Zur Kühlung des Rotors 15 und der indirekten Kühlung des Stators ist der Spalt 16 von Kühlfluid durchströmt.

Beispielsweise kann als das Kühlfluid das von der Kreiselpumpe 11 geförderte Prozessfluid sein. Das Prozessfluid kommt aufgrund der Kapselung des Stators 13 von dem Rotor 15 durch das Spaltrohr 14 mit dem Stator 13 nicht in Kontakt.

Eine alternative Anwendung des gekapselten Elektromotors 12 ist zum Antrieb eines Verdichters zum Verdichten von Prozessgas, wobei der Elektromotor 12 von Prozessgas gekühlt wird.

Allerdings haben derart lange und zylindrische Spalte wie der Spalt 16 den Nachteil, dass, wenn sie von dem Kühlfluid durchströmt werden, die Kräfte, die das Kühlfluid in dem Spalt 16 auf den Rotor 15 bzw. das Spaltrohr 14 ausüben, die Gewichtskraft des Rotors 15 um ein Vielfaches übersteigen können. Ferner können große tangentiale Fluidkräfte in dem Spalt 16 entstehen. Die tangentialen Fluidkräfte können destabilisierend auf den Rotor 15 wirken und die radialen Fluidkräfte können je nach Richtung zusätzlich zur Gewichtskraft des Rotors 15 oder entgegengesetzt dazu gerichtet sein. Ist der Rotor 15 mittels Gleitlager gelagert, so beeinflussen die statischen Kräfte, also die Gewichtskraft des Rotors 15 und die Fluidkräfte, die Lagerkoeffizienten des Gleitlagers und somit die Rotordynamik des Rotors 15. Ist der Rotors 15 mit einem Kugellager gelagert, so ist das Kugellager einem erhöhten Verschleiß ausgesetzt, wenn die Fluidkräfte mit der Gewichtskraft des Rotors 15 in die gleiche Richtung wirkt.

Aufgabe der Erfindung ist es einen gekapselten Elektromotor und eine Abtriebseinheit mit dem gekapselten Elektromotor zu schaffen, wobei sowohl der gekapselte Elektromotor als auch die Abtriebseinheit einen in rotordynamischer Hinsicht stabilen Betrieb und somit eine hohe Zuverlässigkeit und Lebensdauer hat.

Der erfindungsgemäße gekapselte Elektromotor weist einen Rotor, einen um den Rotor angeordneten Stator und eine Kapsel auf, die zwischen dem Rotor und dem Stator angeordnet ist und dadurch den Rotor von dem Stator abkapselt, wobei zwischen dem Rotor und der Kapsel ein um den Rotor laufender Ringspalt ausgebildet ist, der derart gestaltet ist, dass mit Fluid, das in dem Ringspalt bei Betrieb des Elektromotors strömt, die Rotordynamik des Rotors positiv beeinflussbar ist.

Der Ringspalt wird an seinem Innendurchmesser von dem Rotor und an seinem Außendurchmesser von der Kapsel gebildet. Somit strömt das Fluid, das in dem Ringspalt bei Betrieb des Elektromotors strömt, innerhalb des Ringspalts entlang des Rotors und entlang der Kapsel. Die Strömung des Fluids in dem Ringspalt wird bestimmt von den Randbedingungen an den Stirnseiten des Ringspalts, insbesondere dem dort herrschenden statischen Druck, der Relativbewegung zwischen der Kapsel und dem Rotor und den Stoffeigenschaften des Fluids, insbesondere der Viskosität und der Dichte des Fluids. In der Fluidströmung in dem Ringspalt stellt sich eine spezielle Druckverteilung ein, die als eine fluiddynamische Kraft sowohl auf den Rotor als auch auf die Kapsel wirkt.

Ferner ist die Strömung des Fluids in dem Ringspalt durch die geometrische Ausgestaltung der Form des Ringspalts beeinflusst. Durch die Höhe des Ringspalts ist der Strömungsquerschnitt vorgegeben, wobei der in Strömungsrichtung sich vergrößernde Strömungsquerschnitt zu einer Verzögerung der Fluidströmung und einem Anstieg des statischen Drucks und der in Strömungsrichtung sich verkleinernde Strömungsquerschnitt zu einer Beschleunigung des Fluids und einem Absenken des statischen Drucks führt. Somit ist die fluiddynamische Kraft, die von dem Fluid auf den Rotor bzw. die Kapsel ausgeübt wird, von der Form des Ringspalts beeinflusst.

Während des Betriebs des Elektromotors kann sich naturgemäß die Höhe des Ringspalts dynamisch ändern. Hervorgerufen durch diese Dynamik verändern sich die Strömungsverhältnisse innerhalb des Ringspalts, wodurch sich die fluiddynamische Kraft auf den Rotor bzw. die Kapsel auch entsprechend ändert. Die Größe der fluiddynamischen Kraft und deren zeitliche Änderung haben insbesondere auf die Rotordynamik des Rotors einen Einfluss. Durch die geometrische Formgebung des Ringspalts ist somit die Rotordynamik des Rotors beeinflussbar, und bei entsprechender Gestaltung des Ringspalts positiv beeinflussbar.

Dadurch kann das rotordynamische Verhalten des Rotors des gekapselten Elektromotors verbessert werden. Dadurch ist die Zuverlässigkeit des gekapselten Elektromotors erhöht, wodurch die Betriebsicherheit des gekapselten Elektromotors verbessert ist und seine Lebensdauer verlängert ist.

Bevorzugt ist es, dass mit dem Fluid die Steifigkeit und/oder die Dämpfung des Ringspalts beeinflussbar ist.

Hervorgerufen durch die fluiddynamische Kraft, die auf den Rotor bzw. die Kapsel wirkt, insbesondere durch die Größe der fluiddynamischen Kraft und deren zeitliche Änderung, ist dem von dem Fluid durchströmten Ringspalt eine Steifigkeit und eine Dämpfung zuzuschreiben. Sowohl die Dämpfung als auch die Steifigkeit des Ringspalts beeinflussen maßgeblich die Rotordynamik des Rotors, so dass bei einer entsprechend vorteilhaften Gestaltung des Ringspalts die Rotordynamik des Rotors positiv beeinflussbar ist.

Bevorzugt verjüngt sich der Querschnitt des Ringspalts in Längsrichtung des Rotors.

Somit wirkt der Ringspalt als eine Düse oder als ein Diffusor, je nach dem, in welcher Richtung der Ringspalt durchströmt wird. Wirkt der Ringspalt als die Düse, wird die Strömung in dem Ringspalt beschleunigt, wodurch sich in dem Ringspalt in Strömungsrichtung eine Druckverteilung einstellt, bei der der statische Druck in Strömungsrichtung abnimmt. Dadurch stellt sich eine resultierende Radialkraft ein, die außermittig in dem Spalt an dem Rotor angreift. Wirkt der Ringspalt als der Diffusor, wird die Strömung in dem Ringspalt verzögert, wodurch sich in dem Ringspalt in Strömungsrichtung eine Druckverteilung einstellt, bei der der statische Druck in Strömungsrichtung zunimmt. Die Verteilung des statischen Drucks innerhalb des Ringspalts führt zu einer entsprechenden Radialkraft, die auf den Rotor wirkt.

Beim Betrieb des Elektromotors dreht sich der Rotor, wohingegen der Stator mit der Kapsel in Ruhe ist. Aufgrund von Reibungseffekten herrscht die Haftbedingung an der Oberfläche des Rotors und der Oberfläche der Kapsel, wodurch sich in dem Fluid in dem Ringspalt eine Scherströmung einstellt. In der Scherströmung wirken Reibungskräfte, die zu einer resultierenden Tangentialkraft führen, die an dem Rotor angreift.

Durch die Gestaltung des Ringspalts hinsichtlich seiner Spalthöhe und seines Verjüngungsgrads ist die resultierende Radialkraft und die resultierende Tangentialkraft einstellbar. Dadurch ist die Rotordynamik des Rotors bei entsprechender geometrischen Gestaltung des Ringspalts positiv beeinflussbar.

Alternativ ist es bevorzugt, dass der Querschnitt des Ringspalts in Längsrichtung des Rotors mindestens einen Konvergent-Divergent-Abschnitt aufweist.

Damit wird erreicht, dass bei der Durchströmung des Ringspalts in dem konvergenten Teil des Konvergent-Divergent-Abschnitts die Strömung beschleunigt und in dem divergenten Teil des Konvergent-Divergent-Abschnitts die Strömung verzögert wird. Dadurch stellt sich an dem Übergang des konvergenten Teils des Konvergent-Divergent-Abschnitts zu dem divergenten Teil des Konvergent-Divergent-Abschnitts ein Druckminimum ein. Unter der entsprechenden Gestaltung des Konvergent-Divergent-Abschnitts und/oder der Längserstreckung des konvergenten Teils des Konvergent-Divergent-Abschnitts und des divergenten Teils des Konvergent-Divergent-Abschnitts kann die Druckverteilung innerhalb des Ringspalts derart gestaltet werden, dass die resultierende Radialkraft und die resultierende Tangentialkraft auf den Rotor derart ausgebildet sind, dass die Rotordynamik des Rotors positiv beeinflussbar ist.

Bevorzugt ist es, dass bezogen auf die Längsrichtung des Rotors in der Mitte des Ringspalts ein Ringflächenminimum angesiedelt ist.

Dadurch ist der Konvergent-Divergent-Abschnitt in Längsrichtung des Rotors symmetrisch ausgebildet, so dass die resultierende Radialkraft in der Mitte des Ringspalts an dem Rotor angreift.

Alternativ ist bevorzugt, dass der Querschnitt des Ringspalts in Längsrichtung des Rotors mindestens einen Divergent-Konvergent-Abschnitt aufweist.

Damit wird erreicht, dass bei der Durchströmung des Ringspalts in dem divergenten Teil des Divergent-Konvergent-Abschnitts die Strömung verzögert und in dem konvergenten Teil des Divergent-Konvergent-Abschnitts die Strömung beschleunigt wird. Dadurch stellt sich an dem Übergang des divergenten Teils des Divergent-Konvergent-Abschnitts zu dem konvergenten Teil des Divergent-Konvergent-Abschnitts ein Druckmaximum ein. Unter der entsprechenden Gestaltung des Divergent-Konvergent-Abschnitts und/oder der Längserstreckung des divergenten Teils des Divergent-Konvergent-Abschnitts und des konvergenten Teils des Divergent-Konvergent-Abschnitts kann die Druckverteilung innerhalb des Ringspalts derart gestaltet werden, dass die resultierende Radialkraft und die resultierende Tangentialkraft auf den Rotor derart ausgebildet sind, dass die Rotordynamik des Rotors positiv beeinflussbar ist.

Ferner ist bevorzugt, dass bezogen auf die Längsrichtung des Rotors in der Mitte des Ringspalts ein Ringflächenmaximum angesiedelt ist.

Dadurch ist der Divergent-Konvergent-Abschnitt in Längsrichtung des Rotors symmetrisch ausgebildet, so dass die resultierende Radialkraft in der Mitte des Ringspalts an dem Rotor angreift.

Bevorzugt ist, dass der Ringspalt an seinen Stirnseiten gleich große Ringflächen hat.

Damit wird vorteilhaft erreicht, dass die Eintrittsgeschwindigkeit des Fluids in den Ringspalt in Längsrichtung des Rotors das gleiche Geschwindigkeitsniveau hat wie beim Austritt aus dem Ringspalt.

Bevorzugt ist der Ringspalt von einer kegelstumpfartigen Oberfläche des Rotors und einer zylindrischen Oberfläche der Kapsel gestaltet. Alternativ ist es bevorzugt, dass der Ringspalt von einer kegelstumpfartigen Oberfläche der Kapsel und einer zylindrischen Oberfläche des Rotors gestaltet ist. Ferner ist es alternativ bevorzugt, dass der Ringspalt von einer kegelstumpfartigen Oberfläche der Kapsel und einer kegelstumpfartigen Oberfläche des Rotors gestaltet ist.

Weist der Rotor die kegelstumpfartige Oberfläche auf, so ist der Durchmesser des Rotors über dessen Länge ungleichförmig verteilt, wodurch die Steifigkeit des Rotors entsprechend über seine Länge verteilt ist. So führt eine Verjüngung des Rotors zu einer Verminderung der Steifigkeit des Rotors, und eine Verdickung des Rotors zu einer Erhöhung der Steifigkeit des Rotors. Somit kann die Steifigkeitsverteilung des Rotors durch ein entsprechendes Vorsehen der kegelstumpfartigen Oberfläche an dem Rotor gestaltet werden. Dadurch, dass die Steifigkeitsverteilung des Rotors einen Einfluss auf dessen rotordynamisches Verhalten hat, kann durch das entsprechende Vorsehen der kegelstumpfartigen Oberfläche an dem Rotor die Rotordynamik zusammen mit der Gestaltung des Ringspalts positiv beeinflusst werden.

Die kegelstumpfartige bzw. zylindrische Oberfläche des Rotors und die kegelstumpfartige bzw. zylindrische Oberfläche der Kapsel wirken zusammen, so dass zwischen den beiden Oberflächen der Ringspalt ausgebildet ist.

Es ist bevorzugt, dass das Fluid ein Kühlfluid zur Kühlung des Stators ist.

Die erfindungsgemäße Abtriebseinheit weist den gekapselten Elektromotor auf, wobei die Abtriebseinheit mit dem gekapselten Elektromotor antreibbar ist.

Die Rotordynamik des Rotors ist auch von der rotordynamischen Charakteristik der Abtriebseinheit beeinflusst. Somit kann die Rotordynamik des Rotors und die der Abtriebseinheit mittels der Gestaltung des Ringspalts positiv beeinflusst werden.

Bevorzugt weist die Abtriebseinheit eine Spaltrohrpumpe oder eine Verdichtereinheit oder eine Arbeitsmaschine im Allgemeinen auf, die an den Rotor gekuppelt ist.

Ferner ist bevorzugt, dass das Fluid das von der Spaltrohrpumpe oder des Verdichters gefördertes Fluid ist.

Dadurch ist kein zusätzliches Fluid beispielsweise zum Kühlen des Rotors in dem gekapselten Elektromotor notwendig, da der Rotor von dem von der Spaltrohrpumpe geförderten Fluid umgeben ist. Ferner braucht die Kopplung zwischen der Spaltrohrpumpe und dem Rotor nicht fluiddicht ausgebildet zu sein. Dies ist insbesondere vorteilhaft, wenn das Fluid chemisch aggressiv oder brennbar ist.

Im folgenden wird die Erfindung anhand bevorzugter Ausführungsbeispiele einer Stator-Kapsel-Rotor-Anordnung eines erfindungsgemäßen gekapselten Elektromotors anhand der beigefügten schematischen Zeichnungen erläutert. Es zeigt:
- Fig. 1: ein erstes Ausführungsbeispiel der Stator-Kapsel-Rotor-Anordnung,
- Fig. 2: ein zweites Ausführungsbeispiel der Stator-Kapsel-Rotor-Anordnung,
- Fig. 3: ein drittes Ausführungsbeispiel der Stator-Kapsel-Rotor-Anordnung,
- Fig. 4: ein viertes Ausführungsbeispiel der Stator-Kapsel-Rotor-Anordnung,
- Fig. 5: ein fünftes Ausführungsbeispiel der Stator-Kapsel-Rotor-Anordnung,
- Fig. 6: ein sechstes Ausführungsbeispiel der Stator-Kapsel-Rotor-Anordnung,
- Fig. 7: ein siebtes Ausführungsbeispiel der Stator-Kapsel-Rotor-Anordnung,
- Fig. 8: ein achtes Ausführungsbeispiel der Stator-Kapsel-Rotor-Anordnung,
- Fig. 9: eine herkömmliche Spaltrohrmotorpumpe und
- Fig. 10: eine herkömmliche Stator-Kapsel-Rotor-Anordnung.

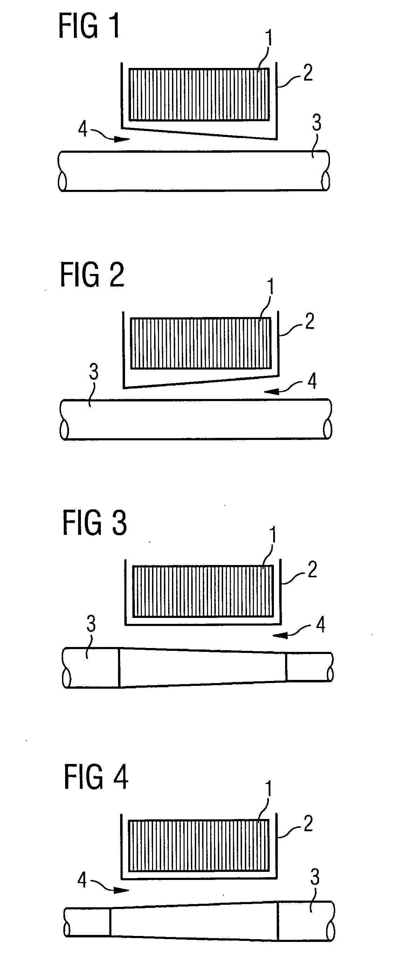

Wie es aus Figuren 1 bis 8 ersichtlich ist, weist eine Stator-Kapsel-Rotor-Anordnung eines erfindungsgemäßen gekapselten Elektromotors einen Stator 1, eine Kapsel 2 und einen Rotor 3 auf. In Figuren 1 bis 8 ist der Rotor 3 schematisch als ein Wellenabschnitt im Längsschnitt und der Stator 1 und die Kapsel 2 schematisch im Längsschnitt dargestellt, wobei von dem Stator 1 und der Kapsel 2 nur die obere Hälfte dargestellt sind.

Um den Rotor 3 ist der Stator 1 konzentrisch angeordnet, wobei um den Stator 1 die Kapsel 2 angeordnet ist. Zwischen dem Innendurchmesser der Kapsel 2 und dem Außendurchmesser des Rotors 3 ist ein Ringspalt 4 ausgebildet. Der Ringspalt 4 erstreckt sich entlang der Längsrichtung des Rotors 3 und ist den Rotor konzentrisch umlaufendend ausgebildet.

Der Ringspalt 4 ist von Fluid (nicht gezeigt) durchströmt, das in den Figuren 1 bis 8 von links nach rechts entlang der Längsrichtung des Rotors 3 durch den Ringspalt 4 strömt. Der Ringspalt 4 weist stirnseitig jeweils eine rechte und eine linke Ringfläche auf, wobei durch die linke Ringfläche das Fluid in den Ringspalt 4 einströmt und durch die rechte Ringfläche das Fluid aus dem Ringspalt 4 ausströmt.

Beim Betrieb der Stator-Kapsel-Rotor-Anordnung dreht sich der Rotor 3, wohingegen der Stator 1 mit der Kapsel 2 in Ruhe ist. Aufgrund der Haftbedingung an der Oberfläche des Rotors 3 und der Oberfläche der Kapsel 2 stellt sich in dem Fluid im Ringspalt 4 eine Scherströmung ein.

Der Ringspalt 4 ist gemäß Figuren 1 bis 4 als in Längsrichtung des Rotors 3 sich verjüngend ausgebildet. Gemäß Figuren 1 und 4 verjüngt sich der Ringspalt 4 in Fluidströmungsrichtung, wobei die linke Stirnseite die Ringfläche des Ringspalts 4 größer ist als die rechte Stirnseite des Ringspalts 4. Gemäß Figur 1 ist der Innendurchmesser der Kapsel 2 kegelstumpfartig ausgebildet, wobei der Außendurchmesser des Rotors 3 zylindrisch ausgebildet ist. Im Gegensatz dazu ist gemäß Figur 4 der Innendurchmesser der Kapsel 2 zylindrisch ausgebildet, wohingegen der Aussendruchmesser des Rotors 3 kegelstumpfartig ausgebildet ist.

Die Stator-Kapsel-Rotor-Anordnungen gemäß Figuren 2 und 3 weisen den Ringspalt 4 als entgegen der Strömungsrichtung sich verjüngend auf. Bei der in Figur 2 gezeigten Stator-Kapsel-Rotor-Anordnung ist der Innendurchmesser der Kapsel 2 kegelstumpfartig ausgebildet, wobei der Außendurchmesser des Rotors 3 zylindrisch ausgebildet ist. Im Gegensatz dazu ist bei der Stator-Kapsel-Rotor-Anordnung gemäß Figur 3 der Innendurchmesser der Kapsel 2 zylindrisch und der Außendurchmesser des Rotors 3 kegelstumpfartig ausgebildet.

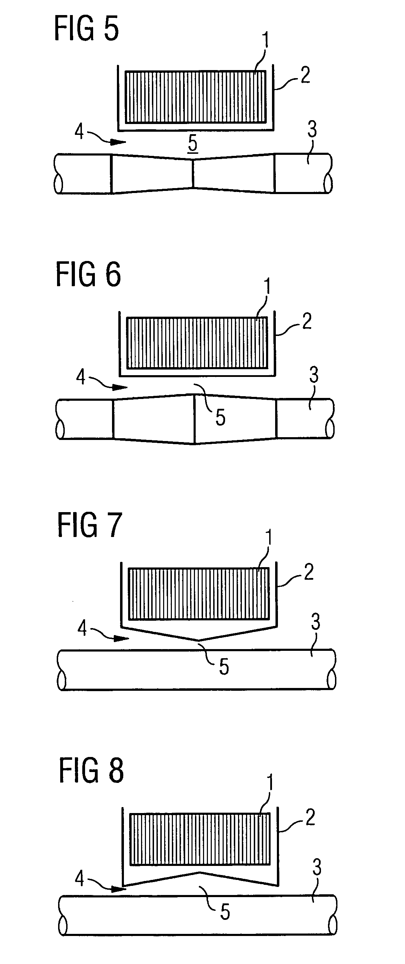

Die in Figuren 5 bis 8 gezeigten Stator-Kapsel-Rotor-Anordnungen weisen den Ringspalt 4 mit gleich großen stirnseitigen Ringflächen auf, wobei in der Mitte 5 des Ringspalts 4 in Längsrichtung des Rotors 3 gesehen die Ringfläche des Ringspalts 4 ungleich zu der der stirnseitigen Ringflächen des Ringspalts 4 ist.

Der Ringspalt 4 der Stator-Kapsel-Rotor-Anordnungen gemäß Figuren 5 und 8 weist einen Divergent-Konvergent-Abschnitt auf, so dass der Querschnitt in Längsrichtung des Rotors 3 in Strömungsrichtung sich bis zur Spaltmitte 5 hin vergrößert und dann wieder verkleinert.

Der Ringspalt 4 der Stator-Kapsel-Rotor-Anordnungen gemäß Figuren 6 und 7 weist einen Konvergent-Divergent-Abschnitt auf, so dass der Querschnitt in Längsrichtung des Rotors 3 in Strömungsrichtung sich bis zur Spaltmitte 5 hin verkleinert und dann wieder vergrößert.

Bei den Stator-Kapsel-Rotor-Anordnungen gemäß Figuren 5 und 6 ist jeweils der Rotor 3 kegelstumpfartig ausgebildet, wobei gemäß Figur 5 in der Rotormitte 5 ein Ringflächemaximum des Ringspalts 4 angesiedelt ist und gemäß Figur 6 in der Spaltemitte 5 ein Ringflächenminimum des Ringspalts 4 angesiedelt ist. Der Innendurchmesser der Kapsel 2 gemäß Figuren 5 und 6 ist zylindrisch ausgebildet.

Bei den Stator-Kapsel-Rotor-Anordnungen gemäß Figuren 7 und 8 ist jeweils die Kapsel 2 kegelstumpfartig ausgebildet, wobei gemäß Figur 7 in der Rotormitte 5 ein Ringflächeminimum des Ringspalts 4 angesiedelt ist und gemäß Figur 8 in der Spaltemitte 5 ein Ringflächenmaximum des Ringspalts 4 angesiedelt ist. Der Innendurchmesser der Rotor 3 gemäß Figuren 7 und 8 ist zylindrisch ausgebildet.

### Bezugszeichenliste

- 1: Stator
- 2: Kapsel
- 3: Rotor
- 4: Ringspalt
- 5: Ringspaltmitte
- 10: Spaltrohrmotorpumpe
- 11: Kreiselpumpe
- 12: Elektromotor
- 13: Stator
- 14: Spaltrohr
- 15: Rotor
- 16: Spalt

## Patentansprüche

1. Gekapselter Elektromotor mit einem Rotor (3), einem um den Rotor (3) angeordneten Stator (1) und einer Kapsel (2), die zwischen dem Rotor (3) und dem Stator (1) angeordnet ist und **dadurch** den Rotor (3) von dem Stator (1) abkapselt, wobei zwischen dem Rotor (3) und der Kapsel (2) ein um den Rotor (3) laufender Ringspalt (4) ausgebildet ist, der derart gestaltet ist, dass mit Fluid, das in dem Ringspalt (4) bei Betrieb des Elektromotors strömt, die Rotordynamik des Rotors (3) positiv beeinflussbar ist.

2. Elektromotor gemäß Anspruch 1,
wobei mit dem Fluid die Steifigkeit und/oder die Dämpfung des Ringspalts (4) beeinflussbar ist.

3. Elektromotor gemäß Anspruch 1 oder 2,
wobei der Querschnitt des Ringspalts (4) in Längsrichtung des Rotors (3) sich verjüngt.

4. Elektromotor gemäß Anspruch 1 oder 2,
wobei der Querschnitt des Ringspalts (4) in Längsrichtung des Rotors (3) mindestens einen Konvergent-Divergent-Abschnitt aufweist.

5. Elektromotor gemäß Anspruch 4,
wobei bezogen auf die Längsrichtung des Rotors (3) in der Mitte (5) des Ringspalts (3) ein Ringflächenminimum angesiedelt ist.

6. Elektromotor gemäß Anspruch 1 oder 2,
wobei der Querschnitt des Ringspalts (4) in Längsrichtung des Rotors (3) mindestens einen Divergent-Konvergent-Abschnitt aufweist.

7. Elektromotor gemäß Anspruch 6,
wobei bezogen auf die Längsrichtung des Rotors (3) in der Mitte (5) des Ringspalts (4) ein Ringflächenmaximum angesiedelt ist.

8. Elektromotor gemäß einem der Ansprüche 4 bis 7,
wobei der Ringspalt (4) an seinen Stirnseiten gleich große Ringflächen hat.

9. Elektromotor gemäß einem der Ansprüche 3 bis 9,
wobei der Ringspalt (4) von einer kegelstumpfartigen Oberfläche des Rotors (3) und einer zylindrischen Oberfläche der Kapsel (2) gestaltet ist.

10. Elektromotor gemäß einem der Ansprüche 3 bis 9,
wobei der Ringspalt (4) von einer kegelstumpfartigen Oberfläche der Kapsel (2) und einer zylindrischen Oberfläche des Rotors (3) gestaltet ist.

11. Elektromotor gemäß einem der Ansprüche 3 bis 9,
wobei der Ringspalt (4) von einer kegelstumpfartigen Oberfläche der Kapsel (2) und einer kegelstumpfartigen Oberfläche des Rotors (3) gestaltet ist.

12. Elektromotor gemäß einem der Ansprüche 1 bis 11,
wobei das Fluid ein Kühlfluid zur Kühlung des Stator (1) ist.

13. Abtriebseinheit mit einem gekapselten Elektromotor gemäß einem der Ansprüche 1 bis 11, wobei die Abtriebseinheit mit dem gekapselten Elektromotor antreibbar ist.

14. Abtriebseinheit gemäß Anspruch 13,
wobei die Abtriebseinheit eine Spaltrohrpumpe oder eine Verdichtereinheit oder eine Arbeitsmaschine im Allgemeinen aufweist, die an den Rotor (3) gekuppelt ist.

15. Abtriebseinheit gemäß Anspruch 14,
wobei das Fluid das von der Spaltrohrpumpe oder des Verdichters geförderte Fluid ist.
